# EUROPEAN PATENT APPLICATION

(11) **EP 2 335 885 A1**
(43) Date of publication of application: **22.06.2011**
(21) Application number: 09075557.0
(22) Date of filing: 17.12.2009
(51) Int. Cl.: B25J 9/16, G05B 19/418, B62D 65/00

(54) **Computer vision device to automatically synchronize the speed and position of manipulator with the moving assembly line in the automotive industry**

(71) Applicant: Duraes, Miguel Matos Pinto Afonso, 2780 Oeiras (PT)
(72) Inventor: Duraes, Miguel Matos Pinto Afonso, 2780 Oeiras (PT)

(57) **Abstract**

Automation device to be installed in automotive assembly equipments such as manipulators, based on computer vision technology to automatically synchronize the speed and position of manipulators with the cars on the assembly line, in automotive assembly factories.

This optical guidance system performs the tasks of object recognition and tracking to precisely and safely dock the manipulators to the car during the assembly process enhancing the precision, overall process quality, reducing investment and operation costs.

## Description

### Field of the Invention

The present invention relates to an automation solution to apply in the automotive assembly industry to automatically synchronize assembly equipments with the cars moving on the assembly line. The invention uses computer vision technology to perform the tasks of object recognition and tracking to execute the synchronization.

### Background of the Invention

On the automotive assembly plants there is a trend on the way cars are built related to the use of complete modules (e.g.: cockpit, power train, front end). Each module can be assembled on a different plant or location. So there is always the issue of assembling the modules on the final assembly line.

Automotive assembly lines are based on a moving conveyor belt or a carrier that transports the cars to be assembled. The car is assembled by workers or robotic machines at each assembly station along the way. This means each part, component or module, is attached to the car while it is moving.

The large pre-assembled modules have to be fixed into the car in one piece by big machines called manipulators. As the cars are moving on the assembly line, the manipulator needs to move above the car at the exact same speed and position. Assembly line and manipulators must be synchronized.

The manipulators presently in use in the automotive assembly plants are mainly human aided and one of the main bottlenecks of all the system is the synchronization between manipulator and car on the assembly line.

The systems generally used today to achieve this synchronization are mechanic or using an encoder system.

The mechanical system consists on the physical attachment of the manipulator to the car. This task is performed by the operator.

The encoder system uses encoders to measure the line speed and, through a wiring system, transmits the information to the manipulator motor and set the same speed. However it does not synchronize the relative position between manipulator and car.

### Summary of the Invention

Assembly equipments such as manipulators have an increasing presence on automotive assembly plants for several reasons: new ergonomic rules for operators; safety legislation; increasing sized pre-assembled modules. Together with this trend the manipulators are becoming more specialized, weighty and expensive. In general they are so heavy that need to be driven by electrical motors. The present invention was made in view of the prior art described above and the purpose of the present invention is to automatically synchronize position and speed of the assembly manipulators with the cars on the moving line.

The device according to the present invention comprises an automation solution based in computer vision technology to automatically position and synchronize the assembly manipulators with the car on the moving assembly line. This optical guidance system performs the tasks of object recognition and tracking to precisely position the manipulator according to the car.

The present invention has several advantages compared with the methods in use presently. As it performs the positioning and tracking tasks automatically it avoids the physical contact between machine and car. This issue is essentially relevant in the human operated manipulators and must be avoided as it can damage the assembled car, not only because of the weight and inertia involved, both hard to handle, but also because of the possible distractions of the operator, who repeats the process time after time every day. On top of this, for manipulators with alignment tasks, the physical contact with the car on the assembly line can deform the reference points resulting in a loss of tolerance. Other traditional way to solve the problem is to use encoders measuring the speed of the line, and then transmitting the speed to the manipulator, which requires a complicated wiring system to connect the two devices and doesn't solve the problem of positioning the manipulator. Beside this, the information transmission is not instantaneous, being the system subject to a delay which affects the synchronization.

The presented invention enhances the overall assembly precision, quality and process efficiency. It reduces the installation cost compared to traditional systems and reduces the operational costs reducing operator time.

### Brief description of the drawings

The generic architecture and characteristics of the invention will now be described, as a non-restrictive example, with reference to the attached drawings wherein:

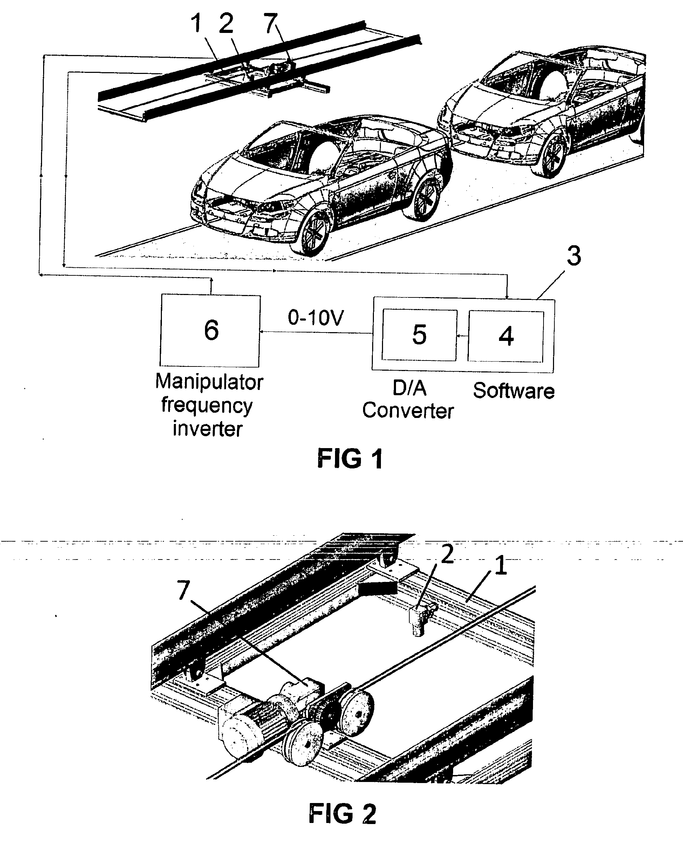

Figure 1 shows a schematic installation of the device according to the invention on a manipulator chariot that simulates the majority of assembly equipments. The single camera of the presented case, installed in the manipulator chariot is facing down, acquiring all the visual data of the moving line and being able to recognize a car when it enters the operating area;
Figure 2 is a detail view of the chariot with one camera as the optical device and the manipulator's motor.

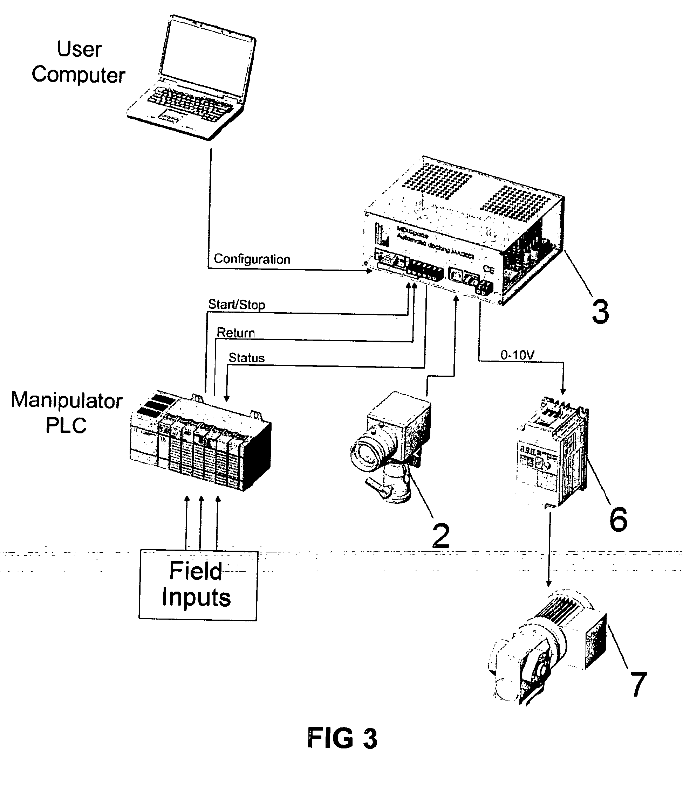

Figure 3 is a diagram of the involved components of the invention and wiring links;

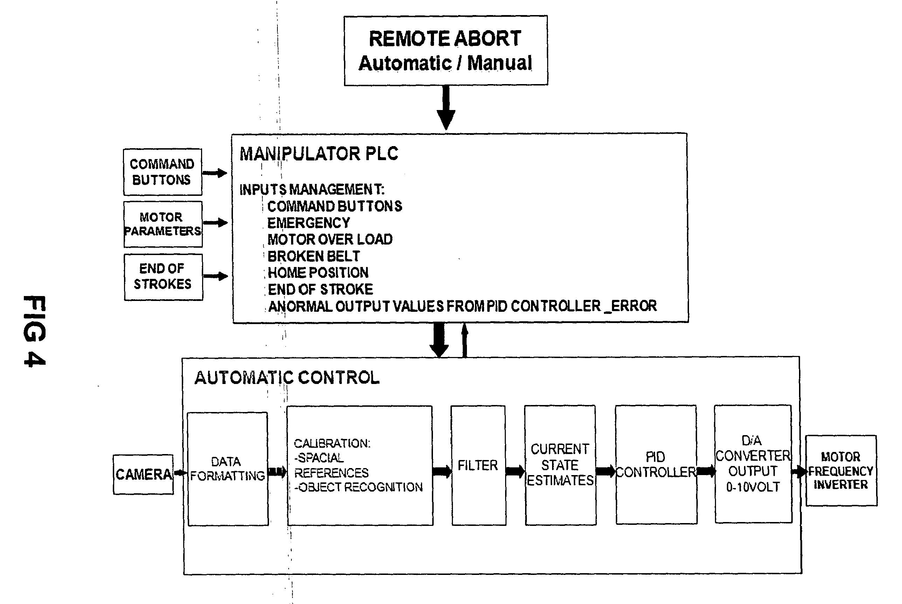

Figure 4 is a block diagram illustrating the operating architecture of the device according to the invention and the program, routines, and symbolic languages that control the functioning of the system.

### Detailed Description of the Invention

The device according to the present invention is a computer vision automation solution to be installed in the automotive assembly equipments such as manipulators to synchronize the position and movement of the manipulators with the cars on the moving assembly line.

The core for the presented invention is the algorithm and the implementation architecture developed to control the equipment using reliable and robust technology. There are two major components associated with the equipment, an optical system composed by at least one camera to obtain visual data from the car on the moving line and an industrial PC that runs the software creating the outputs to command the manipulator motors.

The result is the correct positioning of the manipulator in relation to the car and the following speed synchronization. It is then possible to safely dock the manipulator to the car where it can perform it task.

The way of carrying out the invention is described in detail.

With reference to the attached drawings, the device according to the invention comprises an industrial PC 3, that runs the program, routines, and symbolic languages that control the functioning of the device and direct its operation. This PC 3 is installed in a box that should be fixed to the manipulator's structure.

The second main component is the optical system 2, composed by at least one camera, electrically connected to the PC 3.Should be fixed to the manipulator chariot facing the line. This optical system 2 receives all the visual data information and sends it to the PC 3.

The program, routines and symbolic languages that control the functioning of the device and directs its operation, software 4, run on the PC 3. The software 4 receives the visual data from the optical system 2 and recognizes the intended car on the assembly line. Once it recognizes the car it executes the tracking task, sending an output to the manipulator motor to achieve synchronization of the manipulator with the car on the moving line. The system can recognize different cars on the same assembly line.

The operating scheme starts with the manipulator 1 in the Home position, reference position. It remains there until the optical system 2 installed on the base of the manipulator chariot 1, detects a car on the assembly line. Once the optical system 2 detects a car, the software 4 image acquisition module, running on the PC 3, calculates the relative position between manipulator and car on the line. The software 4 then calculates the needed speed and relative position for the manipulator to synchronize with the car on the moving line. This information is converted to an analogue signal through the Digital to Analogue converter module 5 that is sent to the manipulator's motor frequency inverter 6, which sets the speed on the manipulator motor 7.

The result is the correct positioning of the manipulator in relation to the car and the following speed synchronization. It is then possible to safely dock the manipulator to the car where it can perform its task.

Once the assembly task is performed there is on the field one return button controlled by the operator or a end-of-stroke switch. The result signal is received on a input on the PC 3 that generates the output to the manipulator motor for the return to the Home position and the cycling process starts again.

To set up the device on a given assembling equipment such as a manipulator it is necessary to define working parameters. The working parameters include the identification of the car, establish the needed relative position between the car and the manipulator to perform the assembly task and calibration of the manipulator's motor's frequency inverter.

The software user's interface on the PC 3 includes a friendly user screen to identify the car, to indicate the relative positions between car/manipulator and to calibrate the manipulator's motor's frequency inverter. To have access to this interface the PC 3 has a USB port. With it it is possible to connect a external PC with a monitor. The software 4 has plug and play routines that will generate the communication with the attached PC allowing to define the working parameters.

## Claims

1. An industrial automation device, based in computer vision, to synchronize speed and position of assembly equipments such as manipulators with the cars on automotive assembly lines comprising:
an optical system adapted to detect the car on the assembly line;
an industrial PC electrically connected to said optical system configured to process the information from optical system and adapted to produce an output;
a software module running on said PC adapted to recognize the presence and position of the car on the assembly line and configured to calculate the relative position and speed between manipulator and car on the assembly line;
a Digital to Analogue converter module adapted to read the digital information of said software module and configured to convert the digital information to an analogue signal;
a input adapted to receive a signal controlled by the operator or field related output;
a user's software interface installed on said PC.

2. The device according to claim 1 wherein said optical system consists of at least one camera mechanically attached to the manipulator's chariot facing the automotive assembly line.

3. The device according to claim 1 wherein said industrial PC is electrically connected to the optical system.

4. The system according to claim 1 wherein said software module is running on an industrial PC.

5. The system according to claim 1 wherein said software module comprises image processing and a relative position routines, configured to perform the tasks of object recognition and tracking.

6. The system according to claim 5 wherein said object recognition and tracking is configured to recognize reference points of the car, preselected by the said software, which act as the targets for the special object recognition routines.

7. The system according to claim 1 wherein said Digital to Analogue converter is adapted to send a analogue output to the manipulator's motor frequency inverter.

8. The system according to the claim 1,
wherein said input comprises a plug to receive the electrical cable from the field.

9. The system according to the claim 1,
wherein the user's software interface comprises a USB cable to connect the said PC with any other computer or laptop to set-up the user's configuration parameters.

10. The system according to the claim 9,
wherein said user's configuration parameters comprises a friendly user interface adapted to; identify the car, indicate the relative positions and speed and calibrate the frequency inverter..

11. A method of synchronization of an assembly equipment, such as a manipulator, with a car on the assembly line, the method comprising:
identifying one or more specific cars on the assembling line using a optical device;
determining the relative position between the car and the assembly manipulator;
generating an output to control the manipulator's speed and position in relation to the car.

12. The method of claim 11, and further comprising:
a input to receive field signals related to the end of the manipulator's cycle, including end-of-strokes or command buttons, returning the manipulator to the home position.
